# EUROPÄISCHE PATENTSCHRIFT

(11) **EP 2 434 357 B1**
(45) Veröffentlichungstag und Bekanntmachung des Hinweises auf die Patenterteilung: **12.02.2020**
(21) Anmeldenummer: 10178343.9
(22) Anmeldetag: 22.09.2010
(51) Int. Cl.: G05B 19/414

(54) **Tracesystem für Technologiedaten und/oder Programmereignisse**
Trace system for technology data and/or program events
Système d'enregistrement de données technologiques et/ou d'événements du programme

(43) Veröffentlichungstag der Anmeldung: 28.03.2012
(73) Patentinhaber: Siemens Aktiengesellschaft, 80333 München (DE)
(72) Erfinder: Heber, Tino, 09599 Freiberg (DE); Möhring, Rainer, 97520 Röthlein (DE); Wagner, Peter, 91217 Hersbruck (DE)

(56) Entgegenhaltungen:
- EP-A2- 1 347 356
- EP-A2- 1 892 598
- WO-A1-00/29917
- DE-A1- 10 055 169
- DE-A1-102004 052 555
- US-A- 5 774 377

## Beschreibung

Die Erfindung betrifft ein Tracesystem für Technologiedaten und Programmereignisse. Diese Technologiedaten und Programmereignisse betreffen beispielsweise ein Bewegungssteuerungssystem. Das Bewegungssteuerungssystem weist beispielweise eine Vielzahl von Antrieben auf. Zur Überwachung von Funktionen und/oder Verhalten des Bewegungssteuerungssystems können Daten in einem Trace gespeichert werden.

Bekannt ist eine im weitesten Sinne herkömmliche Erfassung solcher Daten. Beispiele ergeben sich aus der EP 1 892 598 A, der US 5,774,377, der EP 1 347 356 A und der DE 10 2004 052 555 A. Die dort erfassten Daten werden jeweils mit einer Zeitinformation versehen, um deren spätere Verwendbarkeit im Zusammenhang mit anderen, ebenfalls mit einer Zeitinformation versehenen Daten zu gewährleisten.

Eine Aufgabe der Erfindung ist es die Auswertbarkeit von Technologiedaten und Programmereignisse zu verbessern.

Eine Lösung der Aufgabe ergibt sich bei einem Tracesystem bzw. einem entsprechenden Verfahren zum Tracen mit Merkmalen nach einem der Ansprüche 1 bis 12.

Ein gemeinsamer Trace für Technologiewerte, eine Befehlsabarbeitung und/oder Programmereignisse in einem programmierbaren Bewegungssteuerungssystem (Motion Control Systems) kann hilfreich sein bei der Inbetriebsetzung, beim Betrieb des Bewegungssteuerungssystems und/oder auch bei einer Fehleranalyse oder bei Wartungsarbeiten.

Das Bewegungssteuerungssystem weist z.B. einen ersten Antrieb und einen zweiten Antrieb auf. Zur Regelung und/oder Steuerung der Antriebe ist eine Bewegungssteuerung für diese Antriebe vorhanden. Die Bewegungssteuerungen der Antriebe sind über eine Datenkommunikation verknüpft, wobei beispielsweise auch eine Zentraleinheit zur Regelung und/oder Steuerung vorhanden sein kann. Das Bewegungssteuerungssystem betrifft beispielsweise eine Produktionsmaschine oder auch eine Werkzeugmaschine. Beispiele für derartige Maschinen sind: Schleifmaschine, Fräsmaschine, Drehbank, Druckmaschine, Presse, Kran, Verpackungsmaschine, usw.

Ein Tracesystem ist derart ausgestaltet, dass es zur Aufzeichnung von Werten eines Technologieobjektes dient. Dabei ist es einstellbar welcher Wert des Technologieobjekts im Trace zu speichern ist.

Technologieobjekte bieten einem Anwender einer Bewegungssteuerung beispielsweise eine technologische Sicht auf Aktoren und Sensoren, und stellen technologische Funktionen für diese zur Verfügung, z.B.:
- ein Technologieobjekt Achse auf Antrieb und Geber;
- ein Technologieobjekt Externer Geber nur auf einen Geber;
- ein Technologieobjekt Nocken/Nockenspur auf einen definiert zu schaltenden Ausgang; und
- ein Technologieobjekt Messtaster auf einen Messeingang.

Daneben können Technologieobjekte zur Aufbereitung von technologischen Daten auf einer Systemebene verfügbar sein, wie z.B.:
- ein Technologieobjekt Gleichlauf für den Gleichlauf zwischen zwei Achsen oder einer Achse auf einen Geberwert;
- ein Technologieobjekt Bahn zum Verfahren von Bahnachsen entlang einer Bahn und einer Positionierachse synchron zur Bahn;
- ein Technologieobjekt Kurvenscheibe zur Repräsentation von komplexen, programmierbaren Funktionen; und
- ein Technologieobjekte Addierobjekt, Formelobjekt zur systemseitigen Bearbeitung von Bewegungsdaten und Technologiedaten.

Ein Tracesystem weist in einer Ausprägung ein Technologieobjekt oder eine Vielzahl von Technologieobjekten auf. Für zumindest ein Technologieobjekt ist dabei einstellbar welcher Wert des Technologieobjekts in einem Trace zu speichern ist.

Bei dem Wert des Technolgieobjektes kann es sich dabei um zumindest einen der folgenden Werte handeln:
- ein Befehl;
- eine Variable;
- ein Ereignis; und/oder
- ein Status.

Bei dem oder den Werten kann es sich Beispielsweise nur um ein Bit oder auch um ein Wort, ein Doppelwort oder dergleichen handeln.

In einer Ausgestaltung des Tracesystems sind unterschiedliche Werte eines Technologieobjektes oder mehrerer Technologieobjekte verknüpft. Eine Verknüpfung kann beispielsweise durch eine Verarbeitung der Werte (Addition von Sollwerten, Fouriertransformation von Istwerten, usw.) erfolgen. Eine Verknüpfung ergibt sich aber beispielsweise auch durch eine gemeinsame Darstellung von Werten in einem Chart. Vorteilhaft kann es dabei sein, wenn Werte gleicher oder unterschiedlicher Technologieobjekte einen gemeinsamen Zeitbezug aufweisen. Dies gelingt beispielsweise mittels eines Zeitstempels.

In einer Ausgestaltung des Tracesystems weisen unterschiedliche Werte eines Technologieobjektes oder mehrerer Technologieobjekte einen Zeitstempel auf, wobei insbesondere die Zeit der Zeitstempel von einer Globalzeit abhängt.

In einer Ausgestaltung des Tracesystems ist einem Technologieobjekt ein spezifischer Trace zugeordnet. Einem Trace können aber auch verschieden Technologieobjekte zugeordnet sein. Die Technologieobjekte können auf einem Gerät oder auf verschiedenen Geräten zur Ausführung kommen, wobei die verschiedenen Geräte mittels einer datentechnischen Verbindung miteinander datentechnisch verknüpft sind. Beispiele für Geräte sind: ein Stromrichter, eine Steuerung, eine Regelung, eine Speicherprogrammierbare Steuerung (SPS), ein Leitrechner, ein Aktor, ein Sensor, usw. Ein Trace kann beispielsweise auf einem oder mehreren dieser Geräte realisiert sein. Der Trace ist dabei z.B. datentechnisch mit einem Anzeigegerät für Tracedaten verbunden.

In einer Ausgestaltung des Tracesystems ist in einer Darstellung von Tracedaten eine Balkendarstellung einer Befehlslaufzeit vorhanden. Damit lässt sich einfach verfolgen, welche Auswirkungen ein Befehl haben kann.

In einer Ausgestaltung des Tracesystems betrifft ein Technologieobjekt z.B. folgende Funktionen bzw. Objekte::
- Objekt-Achse (mögliche Ausprägungen von Achsen: reale Achsen, virtuelle Achsen, Positionierachsen oder Drehzahlachsen, elektrische Achsen oder Hydraulikachsen, Standardachsen oder kraft-/druckgeregelt, Modulachsen, Gleichlaufachsen, Bahnachsen),
- Objekt-Gleichlauf (wird eine Achse mit der Technologie Gleichlauf angelegt, dann wird zur Achse ein Gleichlaufobjekt erzeugt, wobei im Gleichlaufobjekt Einstellungen für den Gleichlauf hinterlegt sind),
- Objekt-Bahn (für die Projektierung von Bahninterpolationen),
- Objekt-Messtaster (Messtaster dienen zur schnellen und genauen Erfassung von Istpositionen),
- Objekt- Nocke (zur Erzeugung positionsabhängiger Schaltsignale; eine Zuordnung zu Positionierachsen, Gleichlaufachsen oder externen Gebern ist möglich),
- Objekt-Nockenspur (Zusammenfassung mehrerer Nocken),
- Objekt-Externer-Geber (bietet die Funktionalität für die Anschaltung eines externen Gebers ohne Achse),
- Objekt-Kurvenscheibe (zur Definition von Übertragungsfunktionen insbesondere zur Anwendung in anderen Technologieobjekten),
- Objekt-Temperaturkanal (zur Projektierung von Temperaturregelungen),
- Objekt-Getriebe (zur Realisierung eines festen Gleichlaufs auf Basis eines vorgegebenen Betriebefaktors),
- Objekt-Addierer (zur Addition von Zahlen),
- Objekt-Formel (zur funktionalen Verarbeitung von Zahlen),
- Objekt-Sensor (zur Erfassung skalarer Messwerte),
- Objekt-Regler (zur Aufbereitung und/oder Regelung skalarer Messgrößen.

Gemäß eines Verfahrens zum Tracen von Daten eines Technologieobjektes, werden Daten aus einem Technologieobjekt als Tracedaten (Daten die zu tracen sind) ausgewählt und in einem Trace gespeichert. Dabei kann ein Tracesystem verwendet werden, welches nach einem der obig beschriebenen Beispiele ausgebildet ist.

Durch eine Zeitsynchronisation unterschiedlicher Traces unterschiedlicher Komponenten eines Bewegungssteuerungssystem kann die Auswertbarkeit der Daten der Traces verbessert werden. Beispiele unterschiedlicher Komponenten, welche einen Trace aufweisen können sind: Speicherprogrammierbare Steuerung, Leitrechner, Bewegungssteuerung, Nockensteuerwerk, Registerregelung, usw. Diese Komponenten sind verschiedene Teile eines Automatisierungssystems, welches beispielsweise der Automatisierung einer Werkzeugmaschine oder einer Produktionsmaschine dient.

Ein Bewegungssteuerungssystem weist beispielsweise eine erste Bewegungssteuerung, eine zweite Bewegungsteuerung und einen Datenbus auf. Der Datenbus ist beispielsweise ein Bussystem auf Basis von Profibus, Ethernet oder CAN-Bus. Das Bewegungssteuerungssystem weist ferner eine Globalzeit auf. Die Globalzeit ist beispielsweise eine Systemzeit auf welche Zeiten unterschiedlicher Komponenten im System, in Bezug gesetzt werden können. Die Globalzeit kann auch die einzige Zeit im System sein. Ferner kann die Globalzeit in unterschiedliche Taktzeiten unterteilt sein. Durch die Globalzeit können Tracedaten unterschiedlicher Technologieobjekte einander zugeordnet werden. Dies ist insbesondere dann von Vorteil, wenn Technologieobjekte eines Systems zur Bewegungssteuerung auf verschiedene Geräte verteilt sind, welche über den Datenbus zusammenwirken.

Mittels der ersten Bewegungssteuerung werden z.B. erste Tracedaten gesammelt. Mittels der zweiten Bewegungssteuerung werden zweite Tracedaten gesammelt. Beispiele für Tracedaten sind: Ist-Strom, Ist-Spannung, Steuerwort, Alarmsignal, Drehzahlistwert, Lageistwert, Zündimpulse, Temperatur, Druck, usw. Die Tracedaten der Bewegungssteuerungen weisen einen Zeitstempel auf. Die Zeit der Zeitstempel von der ersten Bewegungssteuerung kann gleich oder ungleich der Zeit der Zeitstempel der zweiten Bewegungssteuerung sein. Sind die Zeiten unterschiedlich ist zumindest bekannt, in welcher Relation die Zeiten zueinander stehen, so dass die Tracedaten unterschiedlicher Bewegungssteuerungen zueinander in Relation gesetzt werden können. Beispielsweise können die Zeiten in Relation zu einer Globalzeit gesetzt werden. In einer Ausprägung des Systems ist die Globalzeit beispielsweise die Zeit der ersten wie auch der zweiten Bewegungssteuerung. Die Globalzeit kann von einem Masterzeitgeber über einen Datenbus an die Bewegungssteuerungen übertragen werden. Die Tracedaten weisen vorteilhaft einen von der Globalzeit abhängigen Zeitstempel auf. Dies betrifft erste Tracedaten von der ersten Bewegungssteuerung und zweite Tracedaten von der zweiten Bewegungssteuerung. Die Tracedaten der Bewegungssteuerungen können in einem Tracespeicher in der jeweiligen Bewegungssteuerung gespeichert sein und von dort ausgelesen werden um diese mit anderen Tracedaten weiterer Bewegungssteuerungen zu kombinieren. Die Tracedaten der Bewegungssteuerungen können beispielsweise auch direkt von der Bewegungssteuerung an einen externen Trace übertragen werden.

In einer Ausgestaltung wird ein Trigger über einen Datenbus an die mit dem Datenbus verbundenen Geräte übermittelt. Dabei kann gleichzeitig mit dem Triggersignal eine Zeitinformation übertragen werden. Durch diese Zeitinformation kann in Verbindung mit der Globalzeit ermittelt werden, wann der Trigger tatsächlich aufgetreten ist. Hierfür wird beispielsweise eine Laufzeit der Triggerinformation über den Datenbus verwendet. Ein Automatisierungsgerät bzw. ein Gerät am Datenbus kann hieraus beispielsweise eine Information ableiten, wann eine Datenerfassung zeitsynchron beendet werden kann (dies stellt ein Traceende dar). Die Zeitsynchronität bezieht sich dabei insbesondere auf die Taktzeit des Datenbusses.

Haben verschiedene Tracedaten eine gemeinsame Zeitbasis, so können diese leichter miteinander in Verbindung gesetzt werden. Mittels der Zeitsynchronisation getrennter Messungen (Tracedaten) können die getrennten Messungen z.B. graphisch einfacher überlagert werden, um diese in einem Fenster darzustellen. Vor einer Darstellung können die Tracedaten aus den unterschiedlichen Messungen (von einer ersten Bewegungssteuerung, von einer weiteren Bewegungssteuerung, ... bzw. von einem ersten Sensor, von einem weiteren Sensor, ...) auch mathematisch verarbeitet werden (z.B. Addition, Subtraktion, Korrelationsfunktionen, FFT, usw.). Die Darstellung der Tracedaten und/oder deren Verarbeitung erfolgt beispielsweise in einem Engineeringsystem oder auch in einem Leitrechnersystem. Das Engineeringsystem dient ferner beispielsweise folgenden Aufgaben: Programmierung von Bewegungsabläufen, Programmierung eines Bussystems, Projektierung eines Automatisierungssystems, usw.

Eine Bewegungssteuerung kann derart ausgebildet sein, dass diese zumindest einen Mikroprozessor (insbesondere eine CPU) aufweist. Messungen der Tracedaten erfolgen insbesondere unter Zuhilfenahme zumindest eines Mikroprozessors. Den Messdaten wird ein Zeitstempel mitgegeben, wodurch es beispielsweise mittels eines Engineeringsystems möglich ist Tracedaten als Signal zeitrichtig zueinander darzustellen.

Durch die Nutzung von Zeitstempeln, welche zur Messung vergeben werden, kann der Einfluss von Kommunikationstopologien auf die Auswertemöglichkeit der gemessenen Daten reduziert werden. Die Kommunikationstopologie braucht damit keinen Einfluss auf den zeitsynchronisierten, verteilten Trace haben, sofern das Kommunikationssystem die Topologie beherrscht. Zeitstempel werden beispielsweise direkt durch die Bewegungssteuerung bzw. durch den Sensor vergeben, wobei die Bewegungssteuerung und/oder der Sensor ein Zeitsignal eines Datenbusses empfängt. Durch diesen Empfang ist insbesondere eine Synchronisation auf die Globalzeit möglich.

In einer Ausgestaltung des Bewegungssteuerungssystems weist die erste Bewegungssteuerung einen ersten Trace und die zweite Bewegungssteuerung einen zweiten Trace auf, wobei erste Tracedaten des ersten Trace mit zweiten Tracedaten des zweiten Trace verknüpft sind. Eine Verknüpfung ergibt sich bereits durch einen Zeitstempel, dessen Zeit mit einer Globalzeit gekoppelt ist. Eine weitere Verknüpfung ergibt sich beispielsweise durch eine mathematische Verarbeitung beider Tracedaten. Danach ist es beispielsweise möglich Signale Daten gleichzeitig auf unterschiedlichen Steuerungs- und/oder Regelungseinrichtungen aufzuzeichnen und daraus resultierende Daten zeitsynchron in einer Grafik darzustellen.

In einer Ausgestaltung des Bewegungssteuerungssystems sind zumindest zwei Bewegungssteuerungen über eine Gleichlauffunktion miteinander gekoppelt. Eine erste Bewegungssteuerung ist demnach mit einer zweiten oder jeder weiteren Bewegungssteuerung über eine Funktion (hier z.B. eine Gleichlaufsfunktion) verknüpft. Die Bewegungsteuerungen weisen beispielsweise einen Master auf oder auch ein Leitsystem. Über ein Bussystem können Funktionen Bewegungssteuerungen synchronisiert werden.

In einem synchronisierten Bussystem mit Übertragung der Systemzeit (Globalzeit) sind unter Kenntnis von Verzögerungszeiten (Delayzeiten) einzelne Busanschaltungen und damit auch die Steuerungssysteme zeitlich zueinander wohl definiert, bzw. genau bestimmbar.

Durch die Verwendung der Globalzeit ist es möglich einen verteilten Trace mit genauer zeitlicher Darstellung der Signale zueinander zu realisieren. Die Signale können sehr genau zeitlich zugeordnet werden, und damit auch in einem gemeinsamen Trace mit einer hoch auflösenden Zeitbasis dargestellt werden. Eine Parametrierung des Trace erfolgt beispielsweise mittels eines Engineeringsystems. Der Start eines oder mehrerer Traces kann über ein Triggersignal auf dem Bus initiiert werden. Auch ein Projektübergreifender Start ist durchführbar, z.B. in Verbindung mit einem projektübergreifenden Gleichlauf.

In einer Ausgestaltung des Bewegungssteuerungssystems werden in einem Graphik Tracedaten unterschiedlicher Bewegungssteuerungen zeitsynchronisiert dargestellt. Dies wird durch einen synchronisierten Datenbus möglich. Über den Bus ist die Systemzeit zu übertragen, welche der Synchronisation dient.

Den Start eines oder mehrerer Traces kann ein Trigger auslösen. Der Trigger kann ein internes Softwaresignal oder auch ein externes HW-Triggersignal sein. Mit nur einem Trigger können unterschiedliche separate Traces gestartet werden. Das Triggersignal kann beispielsweise in einer Graphik auch zusammen mit den Tracesignalen dargestellt werden.

Durch die Verwendung von Zeitstempeln mit einer Abhängigkeit von einer Globalzeit ist ein gleichzeitiges, gemeinsam getriggertes Aufzeichnen von Signalen auf verschiedenen Automatisierungssystemen und eine zeitsynchronisierte Darstellung und/oder gemeinsame Darstellung in einem grafischen Trace möglich.

Trigger können auch über einen zweiten Kommunikationsweg übertragen werden, die zeitliche Genauigkeit der Triggerereignisse ist dabei dann nicht entscheidend, wenn die Tracewerte wie beschrieben selbst einen Zeitstempel besitzen.

In einer Ausgestaltung des Systems erfolgt nach Starten des Traces die Aufzeichnung der Daten in einem Ringpuffer. Der Trace kann in jeder Bewegungssteuerung des Gesamtsystems oder auch nur in einer Auswahl von Bewegungssteuerungen gestartet werden. Der Trace kann sich auch in einer Speicherprogrammierbaren Steuerung (SPS), oder in einem Leitsystem oder Engineeringsystem befinden, wobei Tracedaten unterschiedlicher Geräte (z.B. Sensor, Aktor, Steuerung, Regelung) über den Datenbus mit einem Zeitstempel an den Trace übertragen werden. Der Zeitstempel wird also möglichst nahe an der Quelle der Datenentstehung vergeben und mit einem Zeitstempel versehen, welcher von einer Globalzeit eines größeren Systems mit mehreren Kommunikationsteilnehmern abhängt.

Speichert das Engineeringsystem Tracedaten, so kann dort auch eine Auswertung erfolgen. Die aufgezeichneten Daten werden mit Zeitstempel an das Engineeringsystem gesendet. Dort können die Daten mit den Zeitstempeln bzgl. ihrer Relation zueinander ausgewertet und in eine gemeinsame Zeitbasis übertragen werden.

In einer Ausgestaltung kann das Triggersignal von einer Bewegungssteuerung bzw. von einer CPU, an welcher der Trigger auftritt, über UDP Broadcast an weitere insbesondere alle anderen Geräte im System gesendet werden. Falls ein Triggersignal auftritt, bzw. kommuniziert wurde, werden die Tracewerte ab dem Trigger aus dem Ringpuffer in den Tracespeicher geschrieben, bzw. die Werte werden ab dem Triggersignal nicht mehr überschrieben.

Durch die Verwendung von Zeitstempeln muss der Trigger nicht zeitsynchronisiert werden, da die Werte zunächst unabhängig davon bereits gespeichert werden können. Eine Synchronisation von Tracedaten erfolgt über die globalzeitabhängigen Zeitstempel. Hier werden die vorteilhaften Eigenschaften eines synchronisierten Kommunikationssystems mit einer genauen Zeitinformation über das ganze System deutlich. Dabei ist eine Separierung der Kommunikation des Triggerereignisses vom Aufzeichnungs- und Auswertungsvorgang möglich. Die zeitliche Auflösung/Genauigkeit kann damit der Genauigkeit der Zeitsnychronisation in einem isochronen Kommunikationssystem wie z.B. PROFINET IRT entsprechen (IRT: Isochrones Realtime Ethernet).

Die beschriebenen Variationen eines Bewegungssteuerungssystem betreffen jeweils auch ein entsprechendes Verfahren zum Betrieb eines Bewegungssteuerungssystems. Bei einem Verfahren zur Bewegungssteuerung ist eine erste Bewegungssteuerung mit einer zweiten Bewegungsteuerung über einen Datenbus verbunden. Erste Tracedaten der ersten Bewegungssteuerung weisen einen von einer Globalzeit abhängigen Zeitstempel auf. Ebenso weisen zweite Tracedaten der zweiten Bewegungssteuerung einen von der Globalzeit abhängigen Zeitstempel auf, wobei die unterschiedlichen Tracedaten über den Zeitstempel korreliert sind.

Im Folgenden wird die Erfindung beispielhaft anhand von Figuren beschrieben. Dabei zeigt:
- FIG 1: ein Bewegungssteuerungssystem welches eine Globalzeit aufweist;
- FIG 2: schematisch das Prinzip bei einem Objekttrace;
- FIG 3: ein Technologieobjekt;
- FIG 4: eine Darstellungsvariante für Tracedaten;
- FIG 5: eine Darstellungsvariante für die Zusammenstellung von Tracedaten;
- FIG 6: eine Darstellung einer ersten Funktionsgruppe;
- FIG 7: eine Darstellung einer zweiten Funktionsgruppe;
- FIG 8: eine Darstellung einer dritten Funktionsgruppe;
- FIG 9: eine Darstellungsvariante für eine Übersicht zu Technologieobjekten;
- FIG 10: eine Darstellung einer vierten Funktionsgruppe;
- FIG 11: eine Darstellung einer fünften Funktionsgruppe;

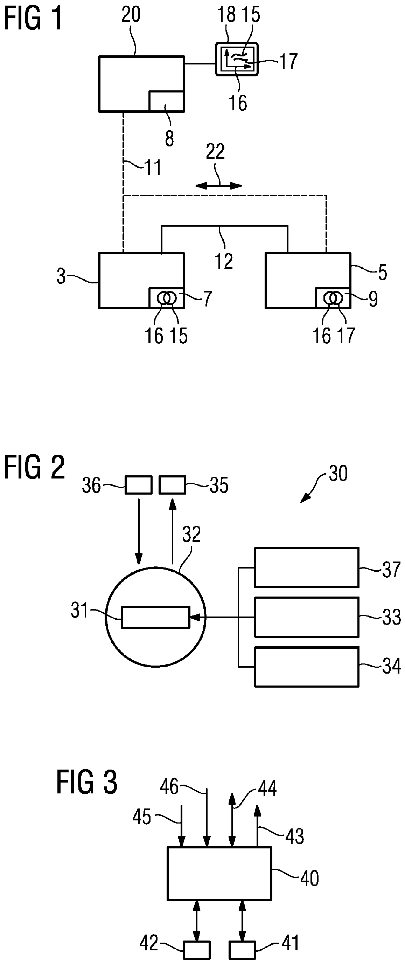

Die Darstellung gemäß FIG 1 zeigt eine erste Bewegungssteuerung 3 und eine zweite Bewegungssteuerung 5. Bei den Bewegungssteuerungen 3, 5 kann es sich auch um Antriebssysteme handeln, welche auch einen Stromrichter zum Bestromen einer elektrischen Maschine aufweisen. Die erste Bewegungssteuerung 3 weist einen ersten Trace 7 auf. Die zweite Bewegungssteuerung weist einen zweiten Trace 9 auf. Die Traces 7 und 9 können Signale, Werte und Daten aufzeichnen, welche in den Bewegungssteuerungen 3 und 5 zur Verfügung stehen. Der erste Trace 7 weist Tracedaten 15 auf, welche mit einem Zeitstempel 16 versehen sind. Dies ist in der Figur durch überschneidende Kreise dargestellt. Ebenso weist der zweite Trace 9 Tracedaten 17 mit Zeitstempeln 16 auf. Die Bewegungssteuerungen 3, 5 sind über einen Datenbus 11 miteinander datentechnisch verbunden. Ebenso können die Bewegungssteuerungen 3 und 5 über eine weitere Datenleitung 12 (z.B. Profinet IRT) miteinander verbunden sein. Über den Datenbus 11 sind die Bewegungssteuerungen 3 und 5 mit einem Engineeringsystem 20 datentechnisch verbunden. Das Engineeringsystem 20 weist einen Trace 8 auf. In diesen Trace 8 können beispielsweise die Tracedaten 15 und 17, welche einen Zeitstempel aufweisen, gespeichert werden, nach dem diese über den Datenbus 11 zum Engineeringsystem 20 übertragen wurden. Weist nur das Engineeringsystem 20 einen Trace 8 auf und sind keine Traces in den Bewegungssteuerungen vorhanden (in der Figur nicht dargestellt), so können zu tracende Daten direkt von den Bewegungssteuerungen zum Engineeringsystem 20 übertragen werden um diese dort im Trace 8 zu speichern. Die Daten werden dabei schon mit dem Zeitstempel, welcher sich an einer Globalzeit 22 orientiert, über den Datenbus 11 zum Engineeringsystem 20 übertragen.

Eine Datenübertragung von Aufzeichnungsdaten (Tracedaten) kann über eine separate Ethernet Verbindung, welche einen Datenbus darstellt, oder auch über einen Profinet-Strang erfolgen.

Eine Triggerübertragung kann beispielsweise über einen asynchronen Kommunikationspfad erfolgen (z.B. UDP (User Data Protocol) auf Profinet-Strang).

Das Engineeringsystem 20 weist einen Monitor 18 zur Darstellung der Tracedaten 15 und 17 auf, wobei diese in einer gemeinsamen Graphik über eine Zeitachse für die Zeitstempeldaten 16 dargestellt sind. Dies dient einer zeitsynchronen Darstellung von Daten aus unterschiedlichen Geräten, hier Bewegungssteuerungen.

Die Darstellung gemäß FIG 2 zeigt prinzipiell ein Tracesystem 30 mit einem Objekttrace. Dargestellt ist ein Technologieobjekt 32, für welches ein Objekttrace 31 parametriert werden kann. Hierfür werden Parameterdaten 36 verwendet. Als Werte 33, 34 und 37 für den Trace können beispielsweise folgende Daten ausgewählt werden:
- Befehle 37 (z.B. für ST-Funktionen, PLCopen Funktionsbausteine)
- Systemvariablen 33
- Konfigurationsdaten 34

Gespeicherte Tracedaten können zur Darstellung an ein Enginieeringsystem 35 übertragen werden.

Die Darstellung gemäß FIG 3 zeigt ein Technologieobjekt 40, welches einen Datenaustausch mit einem Sensor 41 und einem Aktor 42 aufweist. Das Technologieobjekt 40 kann beispielsweise auch einen Alarm 43 senden oder einen Befehl 46 bzw. eine Konfiguration 45 empfangen. Auch Statuswerte, Istwerte und/oder Parameter 44 können versandt bzw. empfangen werden.

Durch die Überwachung und Verfolgung von Befehlsbearbeitung und Befehlsausführung in einem programmierbaren Technologiesystem mit Technologieobjekten ergibt sich eine einfache Konfigurationsmöglichkeit eines Trace. Technologiedaten, Pogrammereignissen und/oder Statusvariablen können gemeinsam in einem Trace dargestellt werden. Eine Beobachtung von Programm- und Systemvariablen ermöglicht einen tiefen Einblick in die Programmabarbeitung. Eine programmbezogene Darstellung im gleichen Trace ist nicht mehr zwingend, da der Trace parametrierbar ist. Ferner ist eine Beobachtung von zeitlichen Abfolgen und Ausführungen von Befehlen z.B. auf eine Achse bezogen sehr flexibel durch einen programmierbaren Trace auf Basis von Technologieobjekten möglich. Vorteilhaft ist ein konfigurierbarer Kommando- und Status-Trace an jedem Technologieobjekt verfügbar gemacht. Darin wird die zeitliche Abfolge der Befehle und der Stati aufgezeigt. Damit sind diese technologieobjektbezogen leicht im Anwenderprogramm, im Engineering-System am HMI verfolgbar. Optional erfolgt eine Darstellung der Kommando, Stati, der Technologieobjektereignisse zusammen mit den Trace für Technologie. Damit ist die Programmbearbeitung (wann welcher Befehl in welchem Status aktiv) und die Technologie in einem Trace verfolgbar.

Technologieobjekte (TO's) stellen Funktionalitäten für Technologie und Motion Control Anwendungen bereit, beinhalten damit technologische Systemfunktionen und machen es möglich eine konkrete Hardware-Anschaltung zu verdecken. Für die TO-übergreifende Verarbeitung von technologischen Daten auf Systemebene stellen die Technologieobjekte definierte Eingangs- und Ausgangsinterfaces bereit. Ein Anwenderprogramm für eine spezielle technologische Anforderung kann ein Technologieobjekt oder eine Vielzahl von Technologieobjekten aufweisen. Zu einem Technologieobjekt 40 kann ein dazu bezogener Trace kreiert werden, womit dieser Trace sowohl als Technologieobjekttraces wie auch optional als Variablentrace nutzbar ist. Traces für Variablen und Stati können auch mit einem für Befehle, Kommandos, Ereignisse verbunden werden, was die Flexibilität erhöht.

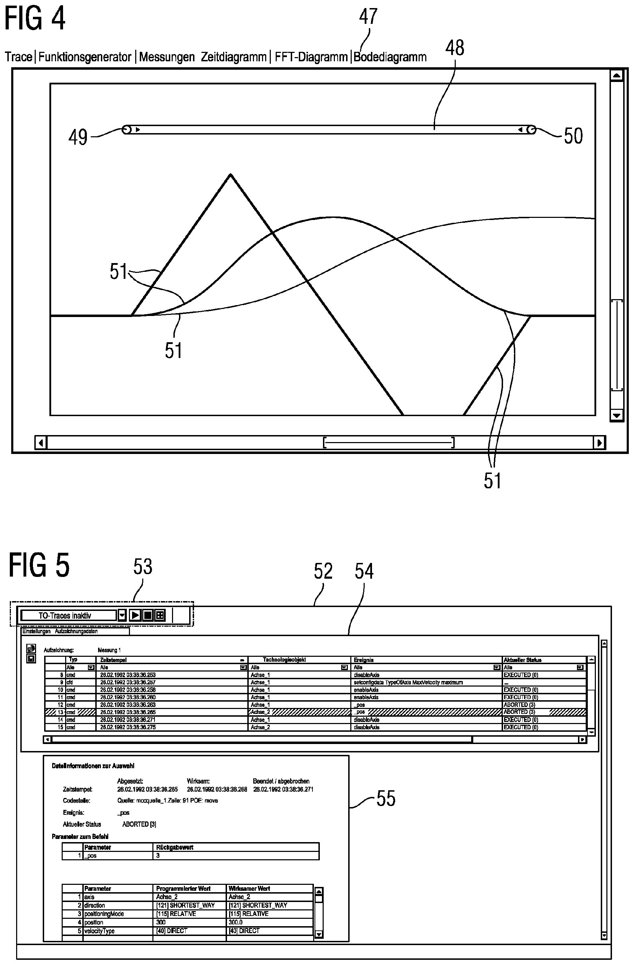

Die Darstellung gemäß FIG 4 zeigt eine Darstellungsvariante für Tracedaten. Über Laschen 47 für:
- Trace;
- Funktionsgenerator;
- Messung;
- Zeitdiagramm;
- FFT-Diagramm; und
- Bodediagramm
können Ansichten gewechselt werden. Im Dargestellten Zeitdiagramm werden Tracedaten 51 dargestellt. In einem Balken 48 kann eine Befehlslaufzeit dargestellt werden. Hierbei kann beispielsweise der Start 49 eines Positionierbefehls und das Ende 50 des Positionierbefehls für eine Achse veranschaulicht sein.

Die Darstellung gemäß FIG 5 zeigt eine Darstellungsvariante für die Zusammenstellung von Tracedaten. Dargestellt ist eine Bildschirmansicht 52 welche verschieden Funktionsgruppen aufweist:
- eine erste Gruppe 53 zum Steuern und zur Anzeige des Status einer Aufzeichnung;
- eine zweite Gruppe 54 mit einer Übersicht über aufgezeichnete bzw. aufzuzeichnende Daten; und
- eine dritte Gruppe 55 für Detailinformationen zu Daten, welche aufzuzeichnen sind bzw. welche aufgezeichnet sind; dabei betreffen die Detailinformationen beispielsweise folgendes:
   ▪ wann/wie wurde der Befehl abgesetzt;
   ▪ mit welchen Daten wurde der Befehl wirksam;
   ▪ wo im Anwenderprogramm wurde der Befehl abgesetzt; und/oder
   ▪ aktueller Status des Befehls.

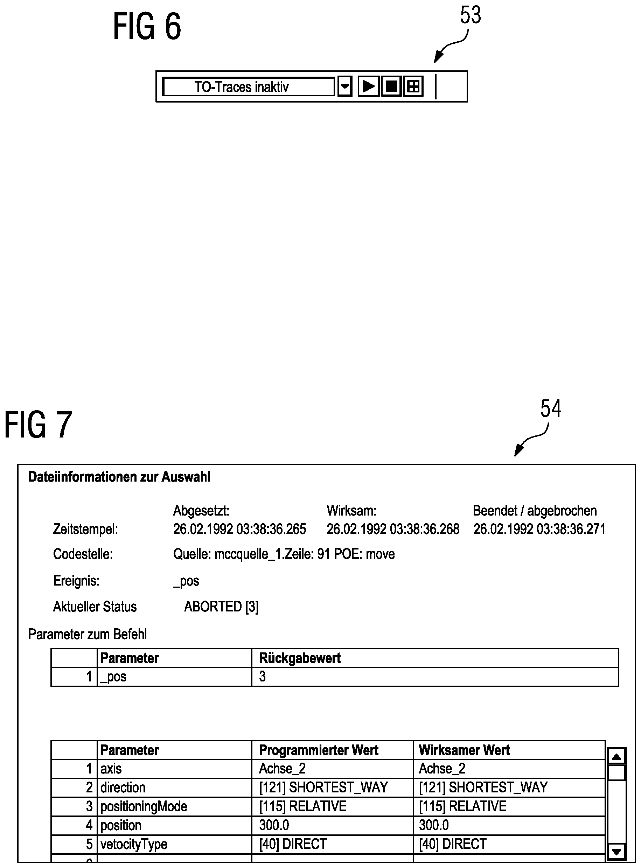

In den Figuren 6, 7 und 8 werden diese Gruppen detaillierter dargestellt.

Die Darstellung gemäß FIG 6 zeigt die erste Gruppe 53 im Detail. Dargestellt ist, dass der Technologieobjekttrace (TO-Trace) inaktiv ist.

Die Darstellung gemäß FIG 7 zeigt die zweite Gruppe 54 im Detail. Dargestellt sind Zeitstempel, Codestelle, Ergebnis und ein aktueller Status eines Zustandes. Ferner ist dargestellt, dass der Zeitstempel verschiedene Zeitwerte beinhalten kann, wie:
- wann erfolgte die Absetzung;
- wann startete die Wirksamkeit; und/oder
- wann wurde etwas beendet oder abgebrochen.

Ferner sind Informationen zu Parametern, Rückgabewerten, programmierten Werten und wirksamen Werten dargestellt.

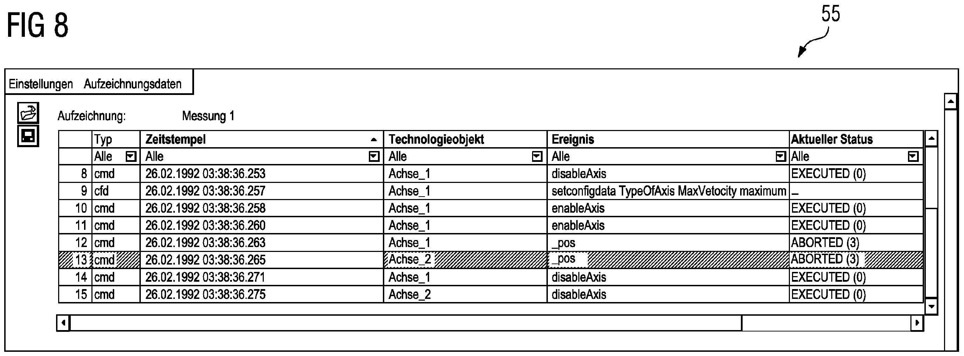

Die Darstellung gemäß FIG 8 zeigt die dritte Gruppe 55 im Detail. Dargestellt sind Aufzeichnungsdaten einer Messung. Diese beinhalten Informationen zu Typ, Zeitstempel, Technologieobjekt, Ereignis und aktueller Status.

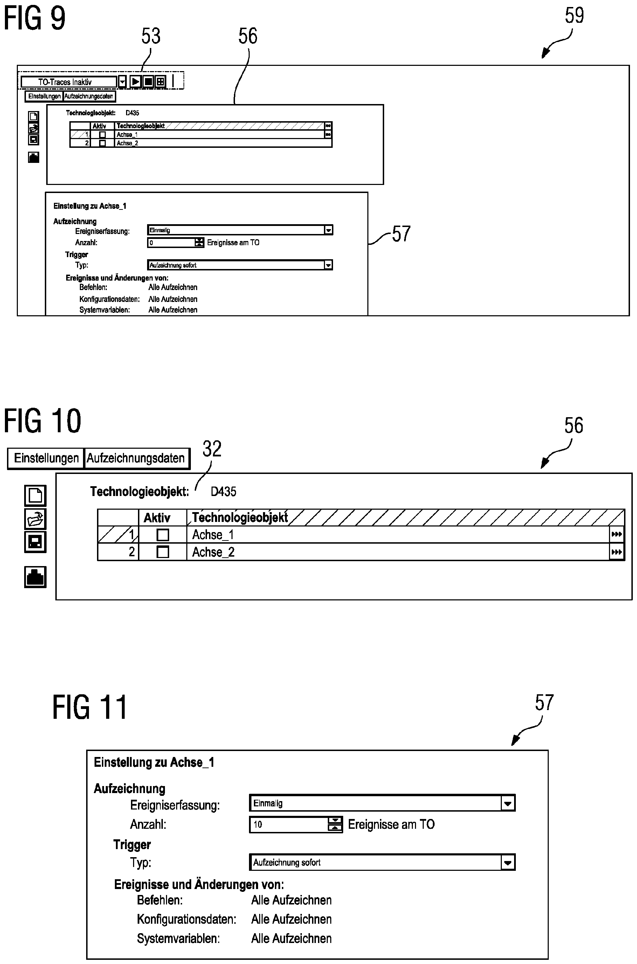

Die Darstellung gemäß FIG 9 zeigt eine Darstellungsvariante für eine Übersicht zu Technologieobjekten. Dargestellt ist eine Bildschirmansicht 59 welche verschieden Funktionsgruppen aufweist:
- eine erste Gruppe 53 zum Steuern und zur Anzeige des Status;
- eine vierte Gruppe 56 mit einer Übersicht über Technologieobjekte; und
- eine fünfte Gruppe 57 für Detailinformationen zu einem Technologieobjekt wie beispielsweise einer Achse, wobei Einstellungen zum Technologieobjekt wie:
   ∘ Aufzeichnungsspeicher
   ∘ Start/Stop Triggerbedingung
   ∘ Befehls-/Variablenänderung
   dargestellt werden.

In den Figuren 10 und 11 werden die Gruppen 56 und 57 detaillierter dargestellt.

Die Darstellung nach FIG 10 zeigt in einer Lasche "Einstellungen" zwei Technologieobjekte (Achse_1 und Achse_2), wobei wählbar ist, welches Objekt aktiv geschalten werden soll. Die Darstellung gemäß FIG 11 zeigt die Einstellung des Technologieobjektes Achse_1 an.

## Patentansprüche

1. Tracesystem (30), aufweisend mindestens ein Technologieobjekt (32, 40), wobei das mindestens eine Technologieobjekt (32, 40) Funktionalitäten für Technologie und Motion Control Anwendungen bereitstellt, wobei das mindestens eine Technologieobjekt (32, 40) jeweils einen Trace (36) aufweist, wobei der Trace (36) zur Aufzeichnung von Werten des Technologieobjektes vorgesehen ist, wobei für das Technologieobjekt (32, 40) einstellbar ist, welcher Wert (33, 34, 37) des Technologieobjekts (32, 40) in dem Trace (36) zu speichern ist.

2. Tracesystem (30) nach Anspruch 1, wobei einstellbar ist, welcher Befehl oder welche Variable (33) des Technologieobjekts (32, 40) in dem Trace (36) zu speichern ist.

3. Tracesystem (30) nach einem der Ansprüche 1 bis 2, wobei einstellbar ist, welches Ereignis des Technologieobjekts (32, 40) in dem Trace (36) zu speichern ist.

4. Tracesystem (30) nach einem der Ansprüche 1 bis 3, wobei einstellbar ist, welcher Status des Technologieobjekts (32, 40) in dem Trace (36) zu speichern ist.

5. Tracesystem (30) nach einem der Ansprüche 1 bis 4, wobei unterschiedliche Werte (33, 34, 37) des mindestens einen Technologieobjektes (32, 40) oder mehrerer Technologieobjekte (32, 40) verknüpft sind.

6. Tracesystem (30) nach einem der Ansprüche 1 bis 5, wobei unterschiedliche Werte (33, 34, 37) eines Technologieobjektes (32, 40) oder mehrerer Technologieobjekte (32, 40) des Tracesystems (30) einen Zeitstempel aufweisen, wobei insbesondere die Zeit der Zeitstempel von einer Globalzeit abhängen.

7. Tracesystem (30) nach einem der Ansprüche 1 bis 6, wobei einem Technologieobjekt (32, 40) ein spezifischer Trace (36) zugeordnet ist.

8. Tracesystem (30) nach einem der Ansprüche 1 bis 7, wobei eine Befehlslaufzeit in einer Balkendarstellung vorliegt.

9. Tracesystem (30) nach einem der Ansprüche 1 bis 8, wobei zumindest ein Technologieobjekt (32, 40) ausgewählt ist aus folgender Aufzählung möglicher Technologieobjekte: Objekt-Achse, Objekt-Gleichlauf, Objekt-Bahn, Objekt-Messtaster, Objekt- Nocke, Objekt-Nockenspur, Objekt-Externer-Geber, Objekt-Kurvenscheibe, Objekt-Temperaturkanal, Objekt-Getriebe, Objekt-Addierer, Objekt-Formel, Objekt-Sensor, Objekt-Regler.

10. Tracesystem (30) nach einem der Ansprüche 1 bis 9, wobei ein Trigger über einen Datenbus an ein Gerät übermittelbar ist, wobei der Trigger eine Zeitinformation aufweist, wobei insbesondere aus der Zeitinformation ein Traceende ermittelbar ist, wobei das Traceende insbesondere zeitsynchronisiert ist.

11. Verfahren zum Tracen von Daten eines Technologieobjektes (32, 40), wobei das Technologieobjekt (32, 40) Funktionalitäten für Technologie und Motion Control Anwendungen bereitstellt, wobei Tracedaten aus einem Technologieobjekt (32, 40) ausgewählt werden und in einem Trace (36) gespeichert werden, wobei für das Technologieobjekt (32, 40) eingestellt wird, welcher Wert (33, 34, 37) des Technologieobjekts (32, 40) in einem Trace (36) zu speichern ist.

12. Verfahren nach Anspruch 11, wobei eingestellt wird, welche Variable (33), welches Ereignis, oder welcher Status des Technologieobjekts (32, 40) in dem Trace (36) zu speichern ist.

13. Verfahren nach Anspruch 11 oder 12, wobei eingestellt wird, welche unterschiedliche Werte (33, 34, 37) des mindestens einen Technologieobjektes (32, 40) oder mehrerer Technologieobjekte (32, 40) des Tracesystems (30) verknüpft werden.

14. Verfahren nach einem der Ansprüche 11 bis 13, wobei unterschiedliche Werte (33, 34, 37) eines Technologieobjektes (32, 40) oder mehrerer Technologieobjekte (32, 40) einen Zeitstempel aufweisen, wobei insbesondere die Zeit der Zeitstempel von einer Globalzeit abhängt.

15. Verfahren nach einem der Ansprüche 11 bis 14, wobei ein Trigger über einen Datenbus an ein Gerät übermittelt wird, wobei der Trigger eine Zeitinformation aufweist, wobei insbesondere aus der Zeitinformation ein Traceende ermittelt wird, wobei das Traceende insbesondere zeitsynchronisiert wird.

## Claims

1. Trace system (30), having at least one technology object (32, 40), wherein the at least one technology object (32, 40) provides functionalities for technology and motion control applications, wherein the at least one technology object (32, 40) has a respective trace (36), wherein the trace (36) is intended to record values of the technology object, wherein the value (33, 34, 37) of the technology object (32, 40) that needs to be stored in the trace (36) is selectable for the technology object (32, 40).

2. Trace system (30) according to Claim 1, wherein the command or the variable (33) of the technology object (32, 40) that needs to be stored in the trace (36) is selectable.

3. Trace system (30) according to either of Claims 1 and 2, wherein the event of the technology object (32, 40) that needs to be stored in the trace (36) is selectable.

4. Trace system (30) according to one of Claims 1 to 3, wherein the status of the technology object (32, 40) that needs to be stored in the trace (36) is selectable.

5. Trace system (30) according to one of Claims 1 to 4, wherein different values (33, 34, 37) of the at least one technology object (32, 40) or of multiple technology objects (32, 40) are combined.

6. Trace system (30) according to one of Claims 1 to 5, wherein different values (33, 34, 37) of a technology object (32, 40) or of multiple technology objects (32, 40) of the trace system (30) have a timestamp, wherein in particular the time of the timestamps is dependent on a global time.

7. Trace system (30) according to one of Claims 1 to 6, wherein a technology object (32, 40) has an associated specific trace (36).

8. Trace system (30) according to one of Claims 1 to 7, wherein a command execution time is present in a bar representation.

9. Trace system (30) according to one of Claims 1 to 8, wherein at least one technology object (32, 40) is selected from the following list of possible technology objects: object axis, object synchronism, object path, object measurement probe, object cam, object cam track, object-external transmitter, object cam disk, object temperature channel, object gears, object adder, object formula, object sensor, object controller.

10. Trace system (30) according to one of Claims 1 to 9, wherein a trigger is transmittable to a device via a data bus, wherein the trigger has time information, wherein a trace end is ascertainable from the time information, in particular, wherein the trace end is synchronized, in particular.

11. Method for tracing data of a technology object (32, 40), wherein the technology object (32, 40) provides functionalities for technology and motion control applications, wherein trace data are selected from a technology object (32, 40) and are stored in a trace (36), wherein the value (33, 34, 37) of the technology object (32, 40) that needs to be stored in a trace (36) is selected for the technology object (32, 40).

12. Method according to Claim 11, wherein the variable (33), the event or the status of the technology object (32, 40) that needs to be stored in the trace (36) is selected.

13. Method according to Claim 11 or 12, wherein the different values (33, 34, 37) of the at least one technology object (32, 40) or of multiple technology objects (32, 40) of the trace system (30) that are combined are selected.

14. Method according to one of Claims 11 to 13, wherein different values (33, 34, 37) of a technology object (32, 40) or of multiple technology objects (32, 40) have a timestamp, wherein in particular the time of the timestamps is dependent on a global time.

15. Method according to one of Claims 11 to 14, wherein a trigger is transmitted to a device via a data bus, wherein the trigger has time information, wherein a trace end is ascertained from the time information, in particular, wherein the trace end is time synchronized, in particular.

## Revendications

1. Système d'enregistrement (30) présentant au moins un objet technologique (32, 40), dans lequel l'au moins un objet technologique (32, 40) fournit des fonctionnalités pour des applications de technologie et de commande de mouvement, dans lequel l'au moins un objet technologique (32, 40) présente au moins un enregistrement (36), dans lequel l'enregistrement (36) est prévu pour enregistrer des valeurs de l'objet technologique, dans lequel pour l'objet technologique (32, 40), il est possible de régler quelle valeur (33, 34, 37) de l'objet technologique (32, 40) est à enregistrer dans l'enregistrement (36).

2. Système d'enregistrement (30) selon la revendication 1, dans lequel il est possible de régler quelle commande ou quelle variable (33) de l'objet technologique (32, 40) est à enregistrer dans l'enregistrement (36).

3. Système d'enregistrement (30) selon l'une des revendications 1 à 2, dans lequel il est possible de régler quel événement de l'objet technologique (32, 40) est à enregistrer dans l'enregistrement (36).

4. Système d'enregistrement (30) selon l'une des revendications 1 à 3, dans lequel il est possible de régler quel statut de l'objet technologique (32, 40) est à enregistrer dans l'enregistrement (36).

5. Système d'enregistrement (30) selon l'une des revendications 1 à 4, dans lequel différentes valeurs (33, 34, 37) de l'au moins un objet technologique (32, 40) ou de plusieurs objets technologiques (32, 40) sont reliées.

6. Système d'enregistrement (30) selon l'une des revendications 1 à 5, dans lequel différentes valeurs (33, 34, 37) d'un objet technologique (32, 40) ou de plusieurs objets technologiques (32, 40) du système d'enregistrement (30) présentent un tampon horaire, dans lequel en particulier l'heure du tampon horaire dépend d'une heure globale.

7. Système d'enregistrement (30) selon l'une des revendications 1 à 6, dans lequel un enregistrement (36) spécifique est attribué à un objet technologique (32, 40).

8. Système d'enregistrement (30) selon l'une des revendications 1 à 7, dans lequel une durée de commande figure dans une représentation en barres.

9. Système d'enregistrement (30) selon l'une des revendications 1 à 8, dans lequel au moins un objet technologique (32, 40) est sélectionné parmi l'énumération suivante d'objets technologiques possibles : axe d'objet, synchronisme d'objet, trajectoire d'objet, palpeur de mesure d'objet, came d'objet, piste de came d'objet, indicateur externe d'objet, disque à coulisse d'objet, canal de température d'objet, engrenage d'objet, additionneur d'objet, formule d'objet, capteur d'objet, régulateur d'objet.

10. Système d'enregistrement (30) selon l'une des revendications 1 à 9, dans lequel un déclencheur peut être transmis à un appareil par le biais d'un bus de données, dans lequel le déclencheur présente une information temporelle, dans lequel en particulier, une fin d'enregistrement peut être calculée à partir de l'information temporelle, dans lequel la fin d'enregistrement est en particulier synchronisée temporellement.

11. Procédé pour l'enregistrement de données d'un objet technologique (32, 40), dans lequel l'objet technologique (32, 40) fournit des fonctionnalités pour des applications de technologie et de commande de mouvement, dans lequel des données d'enregistrement sont sélectionnées à partir d'un objet technologique (32, 40) et enregistrées dans un enregistrement (36), dans lequel pour l'objet technologique (32, 40), il est possible de régler quelle valeur (33, 34, 37) de l'objet technologique (32, 40) est à enregistrer dans l'enregistrement (36).

12. Procédé selon la revendication 11, dans lequel il est réglé quelle variable (33), quel événement ou quel statut de l'objet technologique (32, 40) est à enregistrer dans l'enregistrement (36).

13. Procédé selon la revendication 11 ou 12, dans lequel il est réglé, quelles différentes valeurs (33, 34, 37) de l'au moins un objet technologique (32, 40) ou de plusieurs objets technologiques (32, 40) du système d'enregistrement (30) sont reliées.

14. Procédé selon l'une des revendications 11 à 13, dans lequel différentes valeurs (33, 34, 37) d'un objet technologique (32, 40) ou de plusieurs objets technologiques (32, 40) présentent un tampon horaire, dans lequel en particulier l'heure du tampon horaire dépend d'une heure globale.

15. Procédé selon l'une des revendications 11 à 14, dans lequel un déclencheur est transmis à un appareil par le biais d'un bus de données, dans lequel le déclencheur présente une information temporelle, dans lequel en particulier, une fin d'enregistrement est calculée à partir de l'information temporelle, dans lequel la fin d'enregistrement est en particulier synchronisée temporellement.
